# EUROPEAN PATENT APPLICATION

(11) **EP 4 844 823 A1**
(43) Date of publication of application: **25.11.2026**
(21) Application number: 25741383.1
(22) Date of filing: 08.01.2025
(51) Int. Cl.: H01M 4/133, H01M 10/0525, H01M 10/42, H01M 10/0569, H01M 4/36

(54) **SECONDARY BATTERY AND ELECTRONIC APPARATUS**

(30) Priority: 15.01.2024 CN 202410056746
(71) Applicant: Ningde Amperex Technology Limited, Ningde, Fujian 352100 (CN)
(72) Inventor: ZHENG, Yezhen, Ningde, Fujian 352100 (CN); ZHOU, Shaoyun, Ningde, Fujian 352100 (CN); LIU, Junfei, Ningde, Fujian 352100 (CN); ZOU, Xin, Ningde, Fujian 352100 (CN)
(74) Representative: Kraus & Lederer PartGmbB
(86) International application number: PCT/CN2025/071187
(87) International publication number: WO 2025/152820

(57) **Abstract**

A secondary battery and an electronic apparatus are provided. The secondary battery includes a positive electrode sheet, a negative electrode sheet, a separator, and an electrolyte. The negative electrode sheet includes a negative electrode current collector and a negative electrode material layer disposed on at least one surface of the negative electrode current collector. The negative electrode material layer includes a negative electrode active material. A specific surface area of the negative electrode active material is c m²/g. The negative electrode active material includes a basal plane and an end face, where a proportion of the end face is a. The electrolyte includes a fluorinated linear ester. Based on a mass of the electrolyte, a mass percentage of the fluorinated linear ester is d%, 5≤d≤65, 0.0015≤c/d≤2, and 0.0015≤a/d≤0.12. The electrolyte includes the fluorinated linear ester, and values of d, c/d, and a/d are regulated to be within the above ranges, which can improve the cycling performance of the secondary battery under high-voltage and high-temperature conditions as well as help to improve the fast charging performance of the secondary battery.

## Description

This application claims priority to the Chinese Patent Application No. 202410056746.8 filed with the China National Intellectual Property Administration on January 15, 2024 and entitled "SECONDARY BATTERY AND ELECTRONIC APPARATUS", which is incorporated herein by reference in its entirety.

### TECHNICAL FIELD

This application relates to the field of electrochemical technologies, in particular to a secondary battery and an electronic apparatus.

### BACKGROUND

Secondary batteries, such as lithium-ion batteries, have the characteristics of high specific energy, high operating voltage, low self-discharge rate, small volume, and light weight, and therefore are widely used in various fields such as electric energy storage, portable electronic devices, and electric vehicles. With the continuous iterative development of consumer lithium-ion batteries in recent years, the market has increasingly high requirements on their charging speed. The proportion of fast-charging products has gradually increased, bringing users a very good experience and providing great convenience for daily life.

To meet the requirements of fast charging, the cycling performance of lithium-ion batteries under high voltages and high temperatures is affected, which is caused by an increase in side reactions in the electrolyte under high-voltage and high-temperature conditions. Therefore, how to improve the cycling performance of lithium-ion batteries under high voltages and high temperatures has become an urgent technical problem to be solved by those skilled in the art.

### SUMMARY

This application is intended to provide a secondary battery and an electronic apparatus to improve the cycling performance of the secondary battery. Specific technical solutions are as follows.

According to a first aspect, this application provides a secondary battery, which includes a positive electrode sheet, a negative electrode sheet, a separator, and an electrolyte. The negative electrode sheet includes a negative electrode current collector and a negative electrode material layer disposed on at least one surface of the negative electrode current collector. The negative electrode material layer includes a negative electrode active material. A specific surface area of the negative electrode active material is c m²/g. The negative electrode active material includes a basal plane and an end face, where a proportion of the end face is a. The electrolyte includes a fluorinated linear ester. Based on a mass of the electrolyte, a mass percentage of the fluorinated linear ester is d%, 5≤d≤65, 0.0015≤c/d≤2, and 0.0015≤a/d≤0.12. The electrolyte includes the fluorinated linear ester, and values of d, c/d, and a/d are regulated to be within the above ranges, which can reduce side reactions between the negative electrode active material and the electrolyte, and alleviate gas generation of the electrolyte under high voltages and high temperatures, thereby improving the cycling performance of the secondary battery under high-voltage and high-temperature conditions. In addition, the charging time of the secondary battery can also be shortened, which helps to improve the fast charging performance of the secondary battery.

In some embodiments of this application, 0.1≤c≤10, and 0.1≤a≤0.6. By regulating values of c and a to be within the above ranges, side reactions between the negative electrode active material and the electrolyte can be reduced, and gas generation of the electrolyte under high voltages and high temperatures can be alleviated, thereby improving the cycling performance of the secondary battery under high-voltage and high-temperature conditions. In addition, the charging time of the secondary battery can also be shortened, which helps to improve the fast charging performance of the secondary battery.

In some embodiments of this application, the fluorinated linear ester includes at least one of the following compounds:

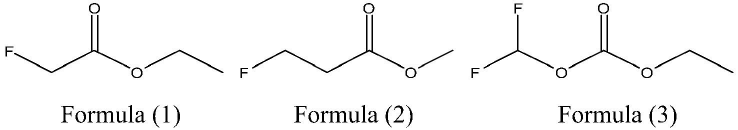

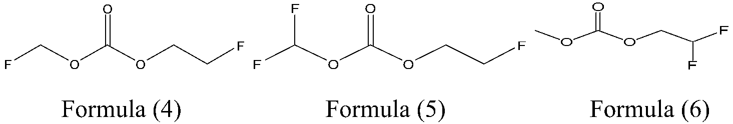

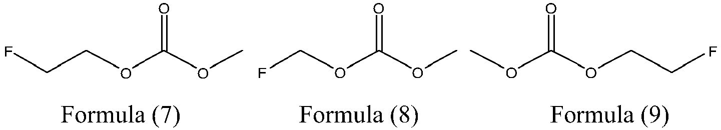

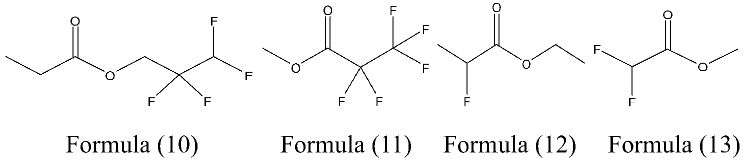

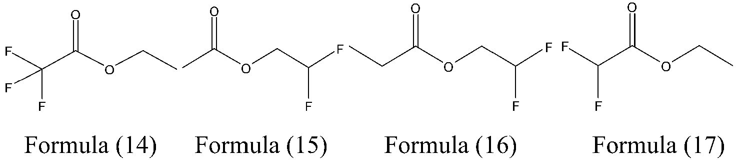

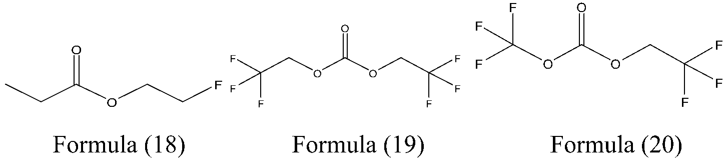

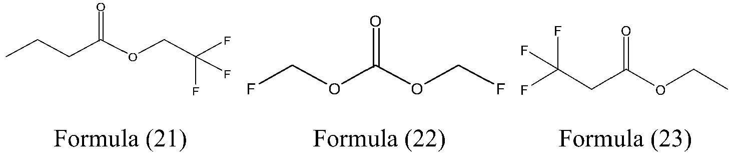

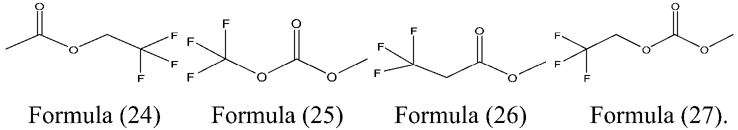

Selecting the fluorinated linear ester within the above range is more conducive to enhancing the oxidation resistance of the electrolyte and alleviating gas generation of the electrolyte under high voltages and high temperatures, thereby improving the cycling performance of the secondary battery under high-voltage and high-temperature conditions.

In some embodiments of this application, the electrolyte further includes fluorinated ethylene carbonate. Based on the mass of the electrolyte, a mass percentage of the fluorinated ethylene carbonate is g%, where 0.01≤g≤15. The electrolyte includes the fluorinated ethylene carbonate, and a value of g is regulated to be within the above range, which can reduce interface side reactions between the negative electrode sheet and the electrolyte, thereby improving the cycling performance of the secondary battery under high-voltage and high-temperature conditions.

In some embodiments of this application, 0.0067≤a/g≤60. By regulating a value of a/g to be within the above range, better compatibility is achieved between the negative electrode active material and the electrolyte, thereby improving the cycling performance of the secondary battery under high-voltage and high-temperature conditions.

In some embodiments of this application, the electrolyte further includes a wetting agent. Based on the mass of the electrolyte, a mass percentage of the wetting agent is e%, where 0.1≤e≤10. The wetting agent includes at least one of C₆ to C₁₂ fluorinated aromatic hydrocarbon, a C₁ to C₆ fluorinated ether compound, or C₁ to C₁₂ perfluoroalkane. The electrolyte includes a wetting agent, and a value of e is regulated to be within the above range, which can reduce the surface tension of the electrolyte and also improve the fluidity of the electrolyte, facilitating transmission of lithium ions in the negative electrode sheet, thereby achieving fast charging and improving the fast charging performance of the secondary battery.

In some embodiments of this application, 0.0015≤e/d≤2. By regulating a value of e/d to be within the above range, the fluorinated linear ester and the wetting agent operate together, which can alleviate gas generation of the electrolyte under high voltages and high temperatures as well as achieve fast charging, thereby improving the cycling performance of the secondary battery under high-voltage and high-temperature conditions as well as improving the fast charging performance of the secondary battery.

In some embodiments of this application, the wetting agent includes at least one of fluorobenzene, 1,2-difluorobenzene, 1,3-difluorobenzene, 1,4-difluorobenzene, 1,3,5-trifluorobenzene, 1,2,3-trifluorobenzene, 1,2,4-trifluorobenzene, 1,2,3,5-tetrafluorobenzene, 1,2,4,5-tetrafluorobenzene, 1,2,3,4-tetrafluorobenzene, pentafluorobenzene, hexafluorobenzene, p-fluorotoluene, p-bis(trifluoromethyl)benzene, 1,1,2,2-tetrafluoroethyl-2,2,3,3-tetrafluoropropyl ether, 2,2,2-trifluoroethyl ether, 1,1,2,2-tetrafluoroethyl-2,2,2-trifluoroethyl ether, difluoromethyl 2,2,3,3-tetrafluoropropyl ether, 1,1,1,3,3,3-hexafluoroisopropyl methyl ether, or perfluorododecane. Selecting the wetting agent within the above range helps to further reduce the surface tension of the electrolyte and improve the fluidity of the electrolyte, thereby achieving fast charging and improving the fast charging performance of the secondary battery.

In some embodiments of this application, the secondary battery satisfies at least one of the following characteristics: (1) 15≤d≤50; (2) 0.015≤c/d≤0.33; (3) 0.0077≤a/d≤0.08; (4) 1≤c≤5; (5) 0.3≤a≤0.5; (6) the electrolyte further includes a wetting agent, and based on the mass of the electrolyte, a mass percentage of the wetting agent is e%, where 0.015≤e/d≤0.33; or (7) the negative electrode active material includes at least one of natural graphite, artificial graphite, hard carbon, or soft carbon. The secondary battery having the above characteristics has good fast charging performance while having good cycling performance under high-voltage and high-temperature conditions.

According to a second aspect, this application provides an electronic apparatus, which includes the secondary battery according to the first aspect of this application. The secondary battery according to the first aspect of this application has good fast charging performance while having good cycling performance under high-voltage and high-temperature conditions, so that the electronic apparatus according to the second aspect of this application has good use performance.

Beneficial effects of this application are as follows.

This application provides a secondary battery and an electronic apparatus. The secondary battery includes a positive electrode sheet, a negative electrode sheet, a separator, and an electrolyte. The negative electrode sheet includes a negative electrode current collector and a negative electrode material layer disposed on at least one surface of the negative electrode current collector. The negative electrode material layer includes a negative electrode active material. A specific surface area of the negative electrode active material is c m²/g. The negative electrode active material includes a basal plane and an end face, where a proportion of the end face is a. The electrolyte includes a fluorinated linear ester. Based on a mass of the electrolyte, a mass percentage of the fluorinated linear ester is d%, 5≤d≤65, 0.0015≤c/d≤2, and 0.0015≤a/d≤0.12. The electrolyte includes the fluorinated linear ester, and values of d, c/d, and a/d are regulated to be within the above ranges, which can reduce side reactions between the negative electrode active material and the electrolyte, and alleviate gas generation of the electrolyte under high voltages and high temperatures, thereby improving the cycling performance of the secondary battery under high-voltage and high-temperature conditions. In addition, the charging time of the secondary battery can also be shortened, thereby improving the fast charging performance thereof.

Certainly, implementing any product or method of this application does not necessarily need to achieve all the advantages described above at the same time.

### DETAILED DESCRIPTION

The technical solutions in some embodiments of this application are clearly and completely described below. Obviously, the described embodiments are only some embodiments rather than all the embodiments of this application. All other embodiments obtained by those skilled in the art based on this application fall within the protection scope of this application.

It should be noted that, in the following content, a lithium-ion battery being a secondary battery is used as an example to explain this application, but the secondary battery of this application is not limited to a lithium-ion battery. The specific technical solutions are as follows.

According to a first aspect, this application provides a secondary battery, which includes a positive electrode sheet, a negative electrode sheet, a separator, and an electrolyte. The negative electrode sheet includes a negative electrode current collector and a negative electrode material layer disposed on at least one surface of the negative electrode current collector. The negative electrode material layer includes a negative electrode active material. A specific surface area of the negative electrode active material is c m²/g. The negative electrode active material includes a basal plane and an end face, where a proportion of the end face is a. The electrolyte includes a fluorinated linear ester. Based on a mass of the electrolyte, a mass percentage of the fluorinated linear ester is d%, where 5≤d≤65, preferably 15≤d≤50; 0.0015≤c/d≤2, preferably 0.015≤c/d≤0.33; and 0.0015≤a/d≤0.12, preferably 0.0077≤a/d≤0.08. For example, a value of d may be 5, 10, 12, 15, 18, 20, 25, 30, 35, 40, 45, 48, 50, 53, 55, 60, 65, or a range defined by any two of these values; a value of c/d may be 0.0015, 0.002, 0.005, 0.008, 0.01, 0.015, 0.02, 0.03, 0.05, 0.06, 0.08, 0.1, 0.15, 0.2, 0.25, 0.3, 0.33, 0.35, 0.5, 0.8, 1, 1.5, 2, or a range defined by any two of these values; and a value of a/d may be 0.0015, 0.002, 0.003, 0.004, 0.005, 0.006, 0.0062, 0.007, 0.0077, 0.008, 0.009, 0.01, 0.03, 0.05, 0.08, 0.1, 0.12, or a range defined by any two of these values.

The inventors have found that when the electrolyte includes a fluorinated linear ester, since the fluorinated linear ester has a high oxidation potential, the oxidation resistance of the electrolyte can be enhanced, and the gas generation problem of the secondary battery under high-voltage and high-temperature conditions can be alleviated, thereby helping to improve the cycling performance of the secondary battery under high-voltage and high-temperature conditions. When the value of d is too small, the oxidation resistance of the electrolyte is poor and the gas generation problem of the secondary battery under high-voltage and high-temperature conditions cannot be alleviated; and when the value of d is too large, the viscosity of the electrolyte is too high, which results in poor wettability to the negative electrode sheet, affecting transmission of lithium ions in the electrolyte and the negative electrode sheet, and prolonging the charging time of the secondary battery. In this application, the specific surface area of the negative electrode active material refers to a specific surface area of negative electrode active material powder particles, and the basal plane and end face represent the crystal structure characteristics of the negative electrode active material. A larger specific surface area of the negative electrode active material indicates a higher defect degree of the negative electrode active material. Lithium ions are mainly intercalated into the negative electrode active material through the end face and some defect sites of the negative electrode active material. The electrolyte undergoes side reactions with the negative electrode active material mainly on the end face. A sum of a proportion of the basal plane and the proportion of the end face is 100%. When the proportion a of the end face is large, the electrolyte is more likely to undergo side reactions with the negative electrode active material. c/d and a/d reflect the compatibility between the fluorinated linear ester and the negative electrode active material. In addition, negative electrode active materials with different specific surface areas and proportions of end faces have different pore structures. When the specific surface area and the proportion of the end face of a negative electrode are within a suitable range, the surface tension of the electrolyte including the fluorinated linear ester can be reduced, the infiltration of the electrolyte can be accelerated, and uniform distribution of the electrolyte in different regions of the negative electrode sheet can be ensured. By matching negative electrode active materials with different specific surface areas and proportions of end faces with suitable fluorinated linear esters, polarization during charging of the secondary battery can be reduced and the fast charging capability can be improved. When the value of c/d is too small, the specific surface area of the negative electrode active material is too small or the content of the fluorinated linear ester is too high, so that the compatibility between the negative electrode active material and the electrolyte is poor, which is not conducive to rapid lithium intercalation of the negative electrode active material. In addition, when the viscosity of the electrolyte is too high, the fluidity is poor, which results in poor wettability to the negative electrode sheet, affecting transmission of lithium ions in the electrolyte and the negative electrode sheet, and prolonging the charging time of the secondary battery. When the value of c/d is too large, the specific surface area of the negative electrode active material is too large or the content of the fluorinated linear ester is too low, which are incompatible, so that the oxidation resistance of the electrolyte cannot be enhanced, and side reactions between the negative electrode active material and the electrolyte are likely to increase. This increases gas generation of the secondary battery under high-voltage and high-temperature conditions and is not conducive to the cycling performance of the secondary battery. When the value of a/d is too large, the proportion of the end face is too large or the content of the fluorinated linear ester is too low, so that the compatibility between the negative electrode active material and the electrolyte is poor, increasing side reactions between the fluorinated linear ester and the negative electrode active material, and affecting the cycling performance of the secondary battery under high-voltage and high-temperature conditions. When the value of a/d is too small, the proportion of the end face is too small or the content of the fluorinated linear ester is too high, which are incompatible. This is not conducive to rapid lithium intercalation of the negative electrode active material. In addition, the viscosity of the electrolyte is too high, so that the wettability to the negative electrode sheet is poor, which is not conducive to rapid lithium intercalation of the negative electrode active material and transmission of lithium ions in the electrolyte, thereby reducing the charging rate of the secondary battery and prolonging the charging time. Therefore, when the electrolyte includes the fluorinated linear ester, and the values of d, c/d, and a/d are regulated to be within the above ranges, side reactions between the negative electrode active material and the electrolyte can be reduced, and gas generation of the electrolyte under high voltages and high temperatures can be alleviated, thereby improving the cycling performance of the secondary battery under high-voltage and high-temperature conditions. In addition, the charging time of the secondary battery can also be shortened, which helps to improve the fast charging performance of the secondary battery. In this application, high voltages refer to voltages greater than or equal to 4.2 V, and high temperatures refer to temperatures greater than or equal to 40°C.

In some embodiments of this application, 0.1≤c≤10 and 0.1≤a≤0.6, preferably 1≤c≤5 and 0.3≤a≤0.5. For example, a value of c may be 0.1, 0.3, 0.5, 0.8, 1, 2, 3, 4, 5, 6, 8, 10, or a range defined by any two of these values; and a value of a may be 0.1, 0.15, 0.2, 0.25, 0.3, 0.32, 0.35, 0.38, 0.4, 0.42, 0.45, 0.48, 0.5, 0.55, 0.6, or a range defined by any two of these values. By regulating the values of c and a to be within the above ranges, side reactions between the negative electrode active material and the electrolyte can be reduced, and gas generation of the electrolyte under high voltages and high temperatures can be alleviated, thereby improving the cycling performance of the secondary battery under high-voltage and high-temperature conditions. In addition, the charging time of the secondary battery can also be shortened, which helps to improve the fast charging performance of the secondary battery.

In some embodiments of this application, the fluorinated linear ester includes at least one of the following compounds:

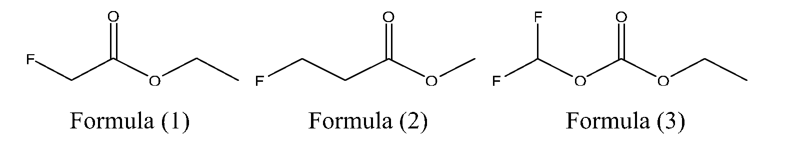

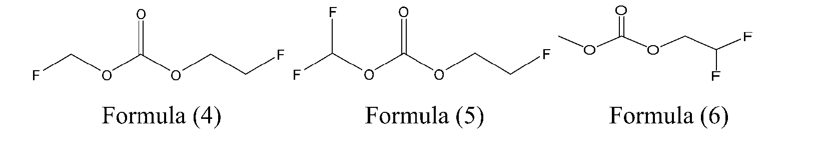

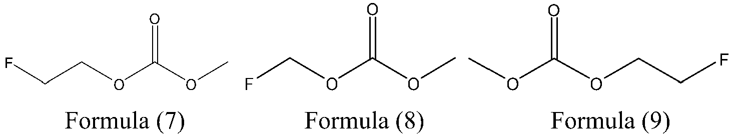

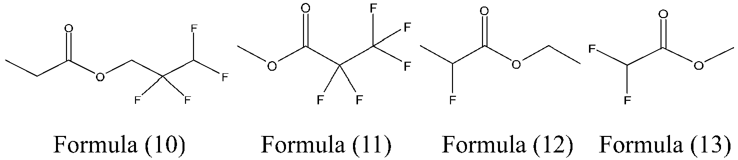

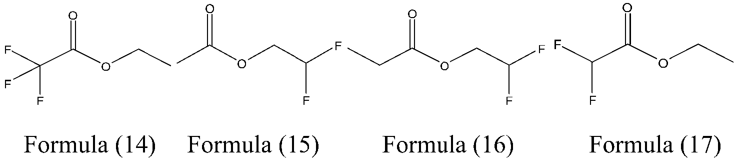

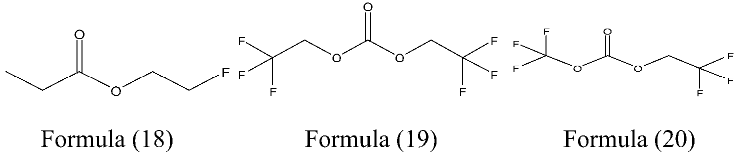

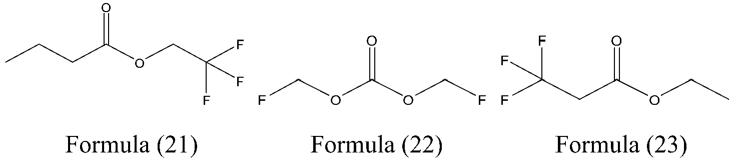

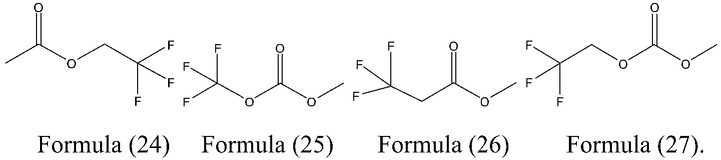

Selecting the fluorinated linear ester within the above range is more conducive to enhancing the oxidation resistance of the electrolyte and alleviating gas generation of the electrolyte under high voltages and high temperatures, thereby improving the cycling performance of the secondary battery under high-voltage and high-temperature conditions.

In some embodiments of this application, the electrolyte further includes fluorinated ethylene carbonate. Based on the mass of the electrolyte, a mass percentage of the fluorinated ethylene carbonate is g%, where 0.01≤g≤15. For example, a value of g may be 0.01, 0.03, 0.05, 0.08, 1, 3, 5, 8, 10, 12, 15, or a range defined by any two of these values. The electrolyte includes the fluorinated ethylene carbonate, and the value of g is regulated to be within the above range, enabling formation of a more stable solid electrolyte interface film on a surface of the negative electrode sheet, and reducing interface side reactions between the negative electrode sheet and the electrolyte, thereby improving the cycling performance of the secondary battery under high-voltage and high-temperature conditions.

In some embodiments of this application, 0.0067≤a/g≤60. For example, a value of a/g may be 0.0067, 0.01, 0.027, 0.05, 0.1, 0.5, 1, 5, 10, 15, 20, 25, 30, 35, 40, 45, 50, 55, 60, or a range defined by any two of these values. By regulating the value of a/g to be within the above range, better compatibility is achieved between the negative electrode active material and the electrolyte. Since the electrolyte undergoes side reactions with the negative electrode active material mainly on the end face, and the fluorinated ethylene carbonate can form a film on the end face of the negative electrode active material, the formed solid electrolyte interface film can protect the negative electrode active material, reduce side reactions between the negative electrode active material and the electrolyte, and alleviate gas generation of the electrolyte under high voltages and high temperatures, thereby improving the cycling performance of the secondary battery under high-voltage and high-temperature conditions.

In some embodiments of this application, the electrolyte further includes a wetting agent. Based on the mass of the electrolyte, a mass percentage of the wetting agent is e%, where 0.1≤e≤10. The wetting agent includes at least one of C₆ to C₁₂ fluorinated aromatic hydrocarbon, a C₁ to C₆ fluorinated ether compound, or C₁ to C₁₂ perfluoroalkane. For example, a value of e may be 0.1, 0.3, 0.5, 0.8, 1, 2, 5, 6, 8, 10, or a range defined by any two of these values. The electrolyte includes the wetting agent, and the value of e is regulated to be within the above range, which can reduce the surface tension of the electrolyte, improve the infiltration capability of the electrolyte to the negative electrode sheet, improve the kinetic performance of the negative electrode sheet, and help to improve the cycling performance of the secondary battery. In addition, the fluidity of the electrolyte can also be improved, which facilitates transmission of lithium ions in the negative electrode sheet, thereby achieving fast charging and improving the fast charging performance of the secondary battery.

In some embodiments of this application, 0.0015≤e/d≤2, preferably 0.015≤e/d≤0.33. For example, a value of e/d may be 0.0015, 0.002, 0.004, 0.005, 0.008, 0.01, 0.015, 0.03, 0.05, 0.08, 0.1, 0.2, 0.3, 0.33, 0.5, 1, 1.5, 2, or a range defined by any two of these values. Since the viscosity of the fluorinated linear ester is large, introducing an appropriate amount of wetting agent with low surface tension can reduce the surface tension of the electrolyte and accelerate the infiltration of the electrolyte, so that the electrolyte in each region of the negative electrode sheet can provide good infiltration and be uniformly distributed. By regulating the value of e/d to be within the above range, the fluorinated linear ester and the wetting agent can operate synergistically; and when used in combination, they can not only reduce side reactions between the negative electrode active material and the electrolyte, but also improve the infiltration capability of the electrolyte to the negative electrode sheet, alleviate gas generation of the electrolyte under high voltages and high temperatures, and achieve fast charging, thereby further improving the cycling performance of the secondary battery under high-voltage and high-temperature conditions as well as improving the fast charging performance of the secondary battery.

In some embodiments of this application, the wetting agent includes at least one of fluorobenzene, 1,2-difluorobenzene, 1,3-difluorobenzene, 1,4-difluorobenzene, 1,3,5-trifluorobenzene, 1,2,3-trifluorobenzene, 1,2,4-trifluorobenzene, 1,2,3,5-tetrafluorobenzene, 1,2,4,5-tetrafluorobenzene, 1,2,3,4-tetrafluorobenzene, pentafluorobenzene, hexafluorobenzene, p-fluorotoluene, p-bis(trifluoromethyl)benzene, 1,1,2,2-tetrafluoroethyl-2,2,3,3-tetrafluoropropyl ether, 2,2,2-trifluoroethyl ether, 1,1,2,2-tetrafluoroethyl-2,2,2-trifluoroethyl ether, difluoromethyl 2,2,3,3-tetrafluoropropyl ether, 1,1,1,3,3,3-hexafluoroisopropyl methyl ether, or perfluorododecane. Selecting the wetting agent within the above range helps to further reduce the surface tension of the electrolyte, improves the infiltration capability of the electrolyte to the negative electrode sheet, improves the kinetic performance of the negative electrode sheet, and further improves the fluidity of the electrolyte, and facilitates transmission of lithium ions in the negative electrode sheet, thereby achieving fast charging and better improving the fast charging performance of the secondary battery.

In some embodiments of this application, the negative electrode active material includes at least one of natural graphite, artificial graphite, hard carbon, or soft carbon. The above negative electrode active material selected has good compatibility with fluorinated linear ester, and the negative electrode active materials with different specific surface areas and proportions of end faces have different pore structures, so that combination of the negative electrode active material and the fluorinated linear ester can reduce polarization during charging of the secondary battery and improve the fast charging capability. This can achieve rapid lithium intercalation of the negative electrode active material as well as improve the infiltration capability of the electrolyte to the negative electrode sheet, thereby helping to improve the cycling performance of the secondary battery under high-voltage and high-temperature conditions and further improving the fast charging performance of the secondary battery. Generally, a particle size of the negative electrode active material can be changed by mechanical crushing (such as ball milling), so as to change the value of the specific surface area c of the negative electrode active material. For example, when other conditions remain unchanged, prolonging a ball milling time reduces the particle size of the negative electrode active material and increases c; and shortening the ball milling time increases the particle size of the negative electrode active material and decreases c.

In this application, the negative electrode active material may be obtained by the following preparation method: raw material pretreatment, granulation (pyrolysis, ball milling, and sieving), graphitization, ball milling, and sieving. Negative electrode active materials with different A values can be developed by adjusting the synthesis process of these materials, such as using high temperature and high pressure during pyrolysis, and whether to apply material coating techniques. When other conditions remain unchanged, within a specific range, increasing the temperature and pressure during pyrolysis increases the value of a; and decreasing the temperature and pressure during pyrolysis decreases the value of a. For example, coating can increase the proportion of the end face, causing an increase in value of a. In this application, for the above high temperature and high pressure, the temperature may be 1200°C to 1500°C, the pressure may be 2 GPa to 5 GPa, and a time may be 0.1 h to 3 h. Asphalt may be used for coating, and based on a mass of the negative electrode active material, a coating amount may be 5% to 15%.

In this application, negative electrode active materials with different values of a may be obtained by purchase, the proportion a of the end face of the negative electrode active material is tested in combination with the test method of "Test of Specific Surface Area of Negative electrode active material and Proportion of End Face" provided in this application, and a negative electrode active material with a required value of a is selected.

In this application, the electrolyte further includes a lithium salt and a non-aqueous solvent. This application imposes no particular limitation on the lithium salt and the non-aqueous solvent, as long as the purposes of this application can be achieved. For example, the lithium salt may include but is not limited to at least one of lithium hexafluorophosphate (LiPF₆), lithium bis(fluorosulfonyl)imide (LiFSI), lithium difluoro(oxalato)borate (LiDFOB), lithium bis(oxalato)borate (LiBOB), lithium nitrate (LiNO₃), or lithium difluorophosphate (LiPO₂F₂). This application imposes no particular limitation on a mass percentage of the lithium salt in the electrolyte, as long as the purposes of this application can be achieved. For example, based on the mass of the electrolyte, the mass percentage of the lithium salt is 8% to 15%. Illustratively, the mass percentage of the lithium salt may be 8%, 9%, 10%, 11%, 13%, 15%, or a range defined by any two of these values. The non-aqueous solvent may include but is not limited to at least one of a carbonate compound, a carboxylate compound, an ether compound, or other organic solvents. The carbonate compound may include but is not limited to at least one of a chain carbonate compound or a cyclic carbonate compound. The chain carbonate compounds may include but is not limited to at least one of dimethyl carbonate (DMC), diethyl carbonate (DEC), dipropyl carbonate (DPC), methyl propyl carbonate (MPC), ethyl propyl carbonate (EPC), or methyl ethyl carbonate (MEC). The cyclic carbonate may include but is not limited to at least one of ethylene carbonate (EC), propylene carbonate (PC), butylene carbonate (BC), or vinylethylene carbonate (VEC). The carboxylate compound may include but is not limited to at least one of methyl formate, methyl acetate, ethyl acetate, n-propyl acetate, tert-butyl acetate, methyl propionate, ethyl propionate, propyl propionate, γ-butyrolactone, decanolactone, valerolactone, or caprolactone. The ether compound may include but is not limited to at least one of dibutyl ether, tetraethylene glycol dimethyl ether, diethylene glycol dimethyl ether, 1,2-dimethoxyethane, 1,2-diethoxyethane, 1-ethoxy-1-methoxyethane, 2-methyltetrahydrofuran, or tetrahydrofuran. The other organic solvents may include but are not limited to at least one of dimethyl sulfoxide, 1,2-dioxolane, sulfolane, methyl sulfolane, 1,3-dimethyl-2-imidazolidinone, N-methyl-2-pyrrolidone, dimethylformamide, acetonitrile, trimethyl phosphate, triethyl phosphate, or trioctyl phosphate. Based on the mass of the electrolyte, a mass percentage of the non-aqueous solvent may be 0% to 87%, for example, 0%, 5%, 10%, 15%, 20%, 25%, 30%, 35%, 40%, 45%, 50%, 55%, 60%, 65%, 70%, 75%, 80%, 85%, 87%, or a range defined by any two of these values.

In some embodiments, the electrolyte includes a fluorinated linear ester, a lithium salt, and a non-aqueous solvent. The mass percentages of the fluorinated linear ester and the lithium salt are as described above, and the mass percentage of the non-aqueous solvent is 20% to 87%. The secondary battery including the above electrolyte can improve the cycling performance of the secondary battery under high-voltage and high-temperature conditions, and also helps to improve the fast charging performance of the secondary battery.

In some embodiments, the electrolyte includes a fluorinated linear ester, a lithium salt, fluorinated ethylene carbonate, and a non-aqueous solvent. The mass percentages of the fluorinated linear ester, the lithium salt, and the fluorinated ethylene carbonate are as described above, and the mass percentage of the non-aqueous solvent is 5% to 86%. The secondary battery including the above electrolyte can further improve the cycling performance of the secondary battery under high-voltage and high-temperature conditions while improving the fast charging performance of the secondary battery.

In some embodiments, the electrolyte includes a fluorinated linear ester, a lithium salt, a wetting agent, and a non-aqueous solvent. The mass percentages of the fluorinated linear ester, the lithium salt, and the wetting agent are as described above, and the mass percentage of the non-aqueous solvent is 10% to 86%. The secondary battery including the above electrolyte can further improve the fast charging performance of the secondary battery while improving the cycling performance of the secondary battery under high-voltage and high-temperature conditions.

In some embodiments, the electrolyte includes a fluorinated linear ester, a lithium salt, fluorinated ethylene carbonate, a wetting agent, and a non-aqueous solvent. The mass percentages of the fluorinated linear ester, the lithium salt, the fluorinated ethylene carbonate, and the wetting agent are as described above, and the mass percentage of the non-aqueous solvent is 0% to 86%. The secondary battery including the above electrolyte can further improve both the cycling performance of the secondary battery under high-voltage and high-temperature conditions and the fast charging performance of the secondary battery.

This application imposes no particular limitation on the negative electrode current collector, as long as the purposes of this application can be achieved. For example, the negative electrode current collector may include copper foil, copper alloy foil, nickel foil, stainless steel foil, titanium foil, nickel foam, copper foam, a carbon-based current collector, a composite current collector (such as a carbon-copper composite current collector, a nickel-copper composite current collector, and a titanium-copper composite current collector), or the like. This application imposes no particular limitation on a thickness of the negative electrode current collector, as long as the purposes of this application can be achieved. For example, the thickness of the negative electrode current collector is 4 µm to 20 µm. In this application, no particular limitation is imposed on a thickness of the negative electrode material layer, as long as the purposes of this application can be achieved. For example, the thickness of the negative electrode material layer on each surface is 30 µm to 160 µm. In this application, the negative electrode material layer may be disposed on one surface in a thickness direction of the negative electrode current collector, or may be disposed on two surfaces in the thickness direction of the negative electrode current collector. It should be noted that the "surface" here may be an entire region of the negative electrode current collector or a partial region of the negative electrode current collector, which is not particularly limited in this application, as long as the purposes of this application can be achieved.

The negative electrode material layer of this application may further include a negative electrode conductive agent, a negative electrode binder, and a negative electrode dispersant. This application imposes no particular limitation on the negative electrode conductive agent and the negative electrode binder, as long as the purposes of this application can be achieved. For example, the negative electrode conductive agent may include but is not limited to at least one of conductive carbon black (Super P), carbon nanotubes (CNTs), graphite, carbon fiber, carbon nanowires, graphene, metal materials, or conductive polymers. The carbon nanotubes may include but are not limited to single-walled carbon nanotubes and/or multi-walled carbon nanotubes. The carbon fiber may include but is not limited to vapor-grown carbon fiber (VGCF) and/or carbon nanofiber. The metal materials may include but are not limited to metal powder and/or metal fiber. Specifically, the metal may include but is not limited to at least one of copper, nickel, aluminum, or silver. The conductive polymers may include but are not limited to at least one of polyphenylene derivatives, polyaniline, polythiophene, polyacetylene, or polypyrrole. The negative electrode dispersant may include sodium carboxymethyl cellulose.

In this application, no particular limitation is imposed on a preparation method of the negative electrode sheet, as long as the purposes of this application can be achieved. For example, preparation may be implemented by the following method: a negative electrode active material, a negative electrode binder, and a negative electrode dispersant are mixed, added with deionized water, and stirred uniformly to obtain a negative electrode slurry with a solid content of 55wt% to 70wt%. The negative electrode slurry is uniformly applied on one surface of the negative electrode current collector, followed by drying to obtain a negative electrode sheet having one surface coated with the negative electrode material layer. Then, the above coating steps are repeated on the other surface of the negative electrode current collector, followed by drying to obtain a negative electrode sheet having two surfaces coated with the negative electrode material layer. After coating, cold pressing and cutting are performed to obtain a negative electrode sheet.

This application imposes no particular limitation on a positive electrode sheet, as long as the purposes of this application can be achieved. For example, the positive electrode sheet includes a positive electrode current collector and a positive electrode material layer disposed on at least one surface of the positive electrode current collector. This application imposes no particular limitation on the positive electrode current collector, as long as the purposes of this application can be achieved. For example, the positive electrode current collector may include aluminum foil, aluminum alloy foil, a composite current collector (such as an aluminum-carbon composite current collector), or the like. This application imposes no particular limitation on a thickness of the positive electrode current collector, as long as the purposes of this application can be achieved. For example, the thickness of the positive electrode current collector is 5 µm to 20 µm. In this application, the positive electrode material layer includes a positive electrode active material. This application imposes no particular limitation on a type of the positive electrode active material, as long as the purposes of this application can be achieved. The positive electrode active material includes a compound that can reversibly intercalate and deintercalate lithium ions. In some embodiments, the positive electrode material layer includes a positive electrode active material having an operating potential of 4.5 V or higher relative to metallic lithium. That is, the positive electrode active material of this application can operate under high voltages. In some embodiments, the positive electrode active material may include at least one of nickel cobalt manganese lithium (NCM), nickel cobalt aluminum lithium, lithium iron phosphate, a lithium-rich manganese-based material, lithium cobalt oxide, lithium manganese oxide, lithium manganese iron phosphate, or the like. Nickel cobalt manganese lithium may include but is not limited to at least one of LiNi_{0.8}Co_{0.1}Mn_{0.1}O₂ (NCM811), LiNi_{0.6}Co_{0.2}Mn_{0.2}O₂ (NCM622), LiNi_{0.5}Co_{0.2}Mn_{0.3}O₂ (NCM523), LiNi_{1/3}Co_{1/3}Mn_{1/3}O₂ (NCM333), or LiNi_{0.9}Co_{0.05}Mn_{0.05}O₂ (NCM955). The above positive electrode active materials may be subjected to doping treatment. In some embodiments, elements used for doping may include at least one of K, Na, Ca, Mg, B, Al, Co, Si, V, Ga, Sn, or Zr. This application imposes no particular limitation on a thickness of the positive electrode material layer, as long as the purposes of this application can be achieved. For example, the thickness of the positive electrode material layer on each surface is 30 µm to 120 µm. In this application, the positive electrode material layer may be disposed on one surface in a thickness direction of the positive electrode current collector, or may be disposed on two surfaces in the thickness direction of the positive electrode current collector. It should be noted that the "surface" here may be an entire region of a surface of the positive electrode current collector or a partial region of a surface of the positive electrode current collector, which is not particularly limited as long as the purposes of this application can be achieved. The positive electrode material layer of this application may further include a positive electrode conductive agent and a positive electrode binder. This application imposes no particular limitation on the positive electrode conductive agent and the positive electrode binder, as long as the purposes of this application can be achieved. For example, the positive electrode conductive agent may be the same as the above negative electrode conductive agent, and the positive electrode binder may be the same as the above negative electrode binder.

In this application, no particular limitation is imposed on a preparation method of the positive electrode sheet, as long as the purposes of this application can be achieved. For example, preparation may be implemented by the following method: a positive electrode active material, a positive electrode conductive agent, and a positive electrode binder are mixed, added with N-methylpyrrolidone (NMP), and stirred uniformly to obtain a positive electrode slurry with a solid content of 65wt% to 85wt%. The positive electrode slurry is uniformly applied on one surface of the positive electrode current collector, followed by drying to obtain a positive electrode sheet having one surface coated with the positive electrode material layer. Then, the above coating steps are repeated on the other surface of the positive electrode current collector, followed by drying to obtain a positive electrode sheet having two surfaces coated with the positive electrode material layer. After coating, cold pressing and cutting are performed to obtain a positive electrode sheet.

In this application, the secondary battery further includes a separator, which is configured to separate the positive electrode sheet from the negative electrode sheet, prevent an internal short circuit of the secondary battery, and allow electrolyte ions to pass freely, without affecting electrochemical charge and discharge processes. This application imposes no particular limitation on the separator, as long as the purposes of this application can be achieved. For example, a material of the separator may include but is not limited to at least one of polyolefin (PO) mainly including polyethylene (PE) and polypropylene (PP), polyester (for example, a polyethylene terephthalate (PET) film), cellulose, polyimide (PI), polyamide (PA), spandex, or aramid. Illustratively, polyethylene includes at least one of high-density polyethylene, low-density polyethylene, or ultra-high molecular weight polyethylene. A type of the separator may include at least one of woven film, non-woven film, microporous film, composite film, rolled film, or spun film. In this application, a thickness of the separator is not particularly limited, as long as the purposes of this application can be achieved. For example, the thickness of the separator may be 5 µm to 500 µm.

In some embodiments, the separator may include a substrate layer and a surface treatment layer. The substrate layer may be a non-woven fabric, a film, or a composite film with a porous structure. A material of the substrate layer may include at least one of polyethylene, polypropylene, polyethylene terephthalate, or polyimide. Optionally, a polypropylene porous film, a polyethylene porous film, a polypropylene non-woven fabric, a polyethylene non-woven fabric, or a polypropylene-polyethylene-polypropylene porous composite film may be used. Optionally, at least one surface of the substrate layer is provided with a surface treatment layer. The surface treatment layer may be a polymer layer or an inorganic substance layer, or may be a layer formed by mixing a polymer and an inorganic substance. For example, the inorganic substance layer includes inorganic particles and a binder. The inorganic particles are not particularly limited, for example, may include at least one of aluminum oxide, silicon oxide, magnesium oxide, titanium oxide, hafnium dioxide, tin oxide, cerium dioxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder is not particularly limited, for example, may be at least one of the above negative electrode binders. The polymer layer contains a polymer, and a material of the polymer includes at least one of polyamide, polyacrylonitrile, an acrylate polymer, polyacrylic acid, polyacrylate, polyvinylpyrrolidone, polyvinyl ether, polyvinylidene fluoride, or poly(vinylidene fluoride-hexafluoropropylene).

The secondary battery of this application further includes a packaging bag for accommodating the positive electrode sheet, the separator, the negative electrode sheet, and the electrolyte, as well as other components known in the art in the secondary battery. This application imposes no limitation on the above other components. This application imposes no particular limitation on the packaging bag, which may be a packaging bag well known in the art, as long as the purposes of this application can be achieved.

The secondary battery of this application is not particularly limited, and it may include any apparatus in which electrochemical reactions take place. In an embodiment of this application, the secondary battery may include but is not limited to: a lithium-ion secondary battery (lithium-ion battery), a lithium metal secondary battery (lithium metal battery), a sodium-ion secondary battery (sodium-ion battery), a sodium metal secondary battery (sodium metal battery), a lithium polymer secondary battery, or a lithium-ion polymer secondary battery.

A preparation process of the secondary battery of this application is well known to those skilled in the art, and is not particularly limited in this application. For example, it may include but is not limited to the following steps: a positive electrode sheet, a separator, and a negative electrode sheet are stacked in order, followed by operations such as winding and folding as needed to obtain an electrode assembly of a wound structure; the electrode assembly is placed in a packaging bag; and an electrolyte is injected into the packaging bag, followed by sealing to obtain a secondary battery. Alternatively, a positive electrode sheet, a separator, and a negative electrode sheet are stacked in order; then, four corners of the entire stacked structure are fixed with adhesive tapes to obtain an electrode assembly of a laminated structure; the electrode assembly is placed in a packaging bag; and an electrolyte is injected into the packaging bag, followed by sealing to obtain a secondary battery. In addition, overcurrent prevention elements, guide plates, and the like may also be placed in the packaging bag as needed to prevent an internal pressure rise, overcharge, and overdischarge of the secondary battery. The packaging bag is a packaging bag well known in the art, which is not limited in this application.

According to a second aspect, this application provides an electronic apparatus, which includes the secondary battery according to the first aspect of this application. The secondary battery according to the first aspect of this application has good fast charging performance while having good cycling performance under high-voltage and high-temperature conditions, so that the electronic apparatus according to the second aspect of this application has good use performance.

This application imposes no particular limitation on a type of the electronic apparatus, which can be any electronic apparatus known in the prior art. In some embodiments of this application, the electronic apparatus may include but is not limited to notebook computers, pen input computers, mobile computers, e-book players, portable phones, portable fax machines, portable copiers, portable printers, head-mounted stereo headphones, video recorders, liquid crystal display televisions, portable cleaners, portable CD players, mini discs, transceivers, electronic notebooks, calculators, memory cards, portable recorders, radios, backup power supplies, motors, automobiles, motorcycles, power-assisted bicycles, bicycles, lighting appliances, toys, game consoles, clocks, electric tools, flashlights, cameras, household large storage batteries, and lithium-ion capacitors.

### Examples

The following provides examples and comparative examples to more specifically illustrate some embodiments of this application. Various tests and evaluations are performed according to the following methods. In addition, unless otherwise specified, "parts" and "%" are based on mass.

### Test methods and devices:

### Test of specific surface area of negative electrode active material and proportion of end face:

A specific surface area analyzer (TriStarII 3020) was used to measure the specific surface area of the negative electrode active material by nitrogen adsorption/desorption method. The specific test was performed in accordance with the national standard GB/T 19587-2017 "Determination of Specific Surface Area of Solid Substances by Gas Adsorption BET Method".

The proportion of the end face was calculated according to the difference in gas adsorption energy between the end face and the basal plane of the negative electrode active material. The adsorption energy of the end face of the negative electrode active material was 20 e/k to 50 e/k, and the adsorption energy of the basal plane was 50 e/k to 80 e/k. Analysis software of the specific surface area analyzer was used to perform fitting treatment on the end face or basal plane corresponding to different adsorption energy, to obtain a proportion a of the end face. An adsorption energy curve of the negative electrode active material was obtained by fitting of a software kit of TriStar II 3020; an integral area from 20e/k to 80e/k in the adsorption energy curve was calculated and recorded as S; an integral area from 20e/k to 50e/k in the adsorption energy curve was recorded as S1; where proportion of end face = S1/S.

### Cycling performance test:

The cycling performance of a lithium-ion battery under a high-voltage condition was evaluated based on a capacity retention rate of the lithium-ion battery measured at 25°C and at a charge cut-off voltage of 4.4 V. A higher capacity retention rate indicates better cycling performance of the lithium-ion battery under high voltages, and a lower capacity retention rate indicates deteriorated cycling performance of the lithium-ion battery under high voltages. The test process was as follows: the lithium-ion battery was placed in a 25°C thermostat, left standing for 60 min, charged at a constant current of 3C to a voltage of 4.3 V, charged at a constant current of 1C to 4.4 V, charged at a constant voltage until the current was 0.05C, left standing for 15 min, and then discharged at 0.2C to 3.0 V. This was one charge-discharge cycle. An initial discharge capacity was recorded as C₁, the charge-discharge cycle was repeated 1000 times, then the test was stopped, and a discharge capacity of the 1000th cycle was recorded as C₂, where cycling capacity retention rate C% of lithium-ion battery at 4.4 V = C₂/C₁ × 100%.

The cycling performance of the lithium-ion battery under a high-temperature condition was evaluated based on a thickness swelling rate of the lithium-ion battery measured at 45°C. A lower thickness swelling rate indicates better cycling performance of the lithium-ion battery under high voltages; and a higher thickness swelling rate indicates deteriorated cycling performance of the lithium-ion battery under high voltages. The test process was as follows: the lithium-ion battery was placed in a 45°C thermostat and left standing for 60 min, and a thickness d₁ of the lithium-ion battery at that moment was recorded. The lithium-ion battery was charged at a constant current of 3C to a voltage of 4.3 V, charged at a constant current of 1C to 4.35 V, charged at a constant voltage until the current was 0.05C, left standing for 15 min, and then discharged at 0.2C to 3.0 V. This was one charge-discharge cycle. A capacity of the initial discharge was taken as 100%, the charge-discharge cycle was repeated 500 times, then the test was stopped, and a thickness of the lithium-ion battery after 500 cycles was recorded as d₂, where cycling thickness swelling rate d% of lithium-ion battery at 45°C = (d2 - d1)/d₁ × 100%.

### Fast charging performance test:

The fast charging performance of the lithium-ion battery was evaluated based on a charging time of the lithium-ion battery. A longer charging time indicates deteriorated fast charging performance, and a shorter charging time indicates better fast charging performance. The test process was as follows: the lithium-ion battery was placed in a 25°C thermostat, left standing for 30 minutes, charged at a constant current of 3C to a voltage of 4.3 V, charged at a constant current of 1C to 4.35 V, and then charged at a constant voltage until the current was 0.05C. A charging time of this process was T min.

### Example 1-1

### <Preparation of negative electrode sheet>

Artificial graphite (with an average particle size of 13 µm) was pyrolyzed in a nitrogen atmosphere reactor at 1200°C and at 2 GPa for 0.5 h. A specific surface area c and a proportion a of the end face of the obtained negative electrode active material artificial graphite are shown in Table 1.

The above prepared negative electrode active material artificial graphite, a negative electrode binder styrene-butadiene rubber (SBR), and sodium carboxymethyl cellulose were mixed at a mass ratio of 97.4:1.2:1.4, and then added with deionized water as a solvent to prepare a slurry with a solid content of 70wt%, and the resulting mixture was stirred uniformly. The negative electrode slurry was uniformly applied on one surface of a copper foil with a thickness of 8 µm and dried at 110°C. Afterwards, the above steps were repeated on the other surface of the copper foil to obtain a negative electrode sheet having two surfaces coated with the negative electrode active material layer. After cold pressing, a negative electrode sheet having two surfaces coated with the negative electrode active material layer was obtained, where a thickness of the negative electrode active material layer on each surface was 150 µm. The negative electrode sheet was cut into a dimension of 78 mm × 875 mm, with tabs welded thereto for later use.

### <Preparation of positive electrode sheet>

A positive electrode active material LiNi_{0.6}Co_{0.2}Mn_{0.2}O₂, a positive electrode conductive agent acetylene black, and a positive electrode binder polyvinylidene fluoride (PVDF) were mixed at a mass ratio of 96:2:2, N-methylpyrrolidone (NMP) was added as a solvent, and the mixture was stirred uniformly under the action of a vacuum mixer to obtain a positive electrode slurry with a solid content of 75wt%. The positive electrode slurry was uniformly applied on one surface of a positive electrode current collector aluminum foil with a thickness of 12 µm, and dried at 85°C. Then, the above steps were repeated on the other surface of the aluminum foil to obtain a positive electrode sheet having two surfaces coated with the positive electrode active material layer. After cold pressing, a positive electrode sheet having two surfaces coated with the positive electrode active material layer was obtained, where a thickness of the positive electrode active material layer on each surface was 100 µm. The positive electrode sheet was cut into a dimension of 74 mm × 867 mm, with tabs welded thereto for later use.

### <Preparation of electrolyte>

In a dry argon atmosphere glove box, ethylene carbonate (EC) and diethyl carbonate (DEC) were mixed at a mass ratio of 1:1 to obtain a non-aqueous solvent, and then a fluorinated linear ester of formula (27) and lithium salt LiPF₆ were added to a basic organic solvent, and the resulting mixture was mixed uniformly to obtain an electrolyte. Based on the mass of the electrolyte, a mass percentage of the lithium salt was 12.5%, a mass percentage d% of the fluorinated linear ester was as shown in Table 1, and the balance was the non-aqueous solvent.

### <Separator>

A polyethylene (PE) porous polymer film (provided by Celgard) with a thickness of 15 µm was used as the separator.

### <Preparation of lithium-ion battery>

The positive electrode sheet, the separator, and the negative electrode sheet were stacked in order, with the separator located between the positive electrode sheet and the negative electrode sheet for isolation, and then wound to obtain an electrode assembly; the electrode assembly was placed in an aluminum-plastic film packaging bag, dried in a vacuum oven at 85°C for 12 h to remove moisture, and the above prepared electrolyte was injected, followed by processes such as vacuum sealing, standing, formation (constant-current charging was performed at 0.02C to 3.5 V, and then constant-current charging was performed at 0.1C to 3.9 V), shaping, capacity testing, and secondary packaging, to obtain a lithium-ion battery.

### Examples 1-2 to 1-6

Except that the mass percentage d% of the fluorinated linear ester was adjusted according to Table 1, the mass percentage of the non-aqueous solvent was changed accordingly, and the mass percentage of the lithium salt and the mass ratio of the components of the non-aqueous solvent remained unchanged, the rest were the same as in Example 1-1.

### Examples 1-7 to 1-12

Except that the type of the fluorinated linear ester was adjusted according to Table 1, the rest were the same as in Example 1-1.

### Examples 1-13 to 1-28

Except that the relevant parameters were adjusted according to Table 1 so that the values of c/d and a/d were as shown in Table 1, the rest were the same as in Example 1-10. When the mass percentage d% of the fluorinated linear ester was changed, the mass percentage of the non-aqueous solvent was changed accordingly, and the mass percentage of the lithium salt and the mass ratio of the components of the non-aqueous solvent remained unchanged. The negative electrode active material was ball-milled, and the ball milling time was adjusted to ensure that the value of the specific surface area c of the negative electrode active material was as shown in Table 1. The temperature and pressure of the pyrolysis treatment were adjusted to ensure that the value of the proportion a of the end face was as shown in Table 1.

### Examples 2-1 to 2-8

Except that fluorinated ethylene carbonate was further introduced into the electrolyte and the parameters were adjusted according to Table 2, the rest were the same as in Example 1-4.

### Examples 2-9 to 2-17

Except that a wetting agent fluorobenzene was further introduced into the electrolyte and the parameters were adjusted according to Table 2, the rest were the same as in Example 2-5.

### Examples 3-1 to 3-14

Except that a wetting agent was further introduced into the electrolyte and the parameters were adjusted according to Table 3, the rest were the same as in Example 1-4.

### Comparative Example 1

Except that the electrolyte did not include the fluorinated linear ester, the mass percentage of the non-aqueous solvent was changed accordingly, and the mass percentage of the lithium salt and the mass ratio of the components of the non-aqueous solvent remained unchanged, the rest were the same as in Example 1-13.

### Comparative Example 2

Except that the electrolyte did not include the fluorinated linear ester, the mass percentage of the non-aqueous solvent was changed accordingly, and the mass percentage of the lithium salt and the mass ratio of the components of the non-aqueous solvent remained unchanged, the rest were the same as in Example 1-1.

### Comparative Examples 3 to 6

Except that the relevant parameters were adjusted according to Table 1 to ensure that the values of c/d and a/d were as shown in Table 1, the rest were the same as in Example 1-13. When the mass percentage d% of the fluorinated linear ester was changed, the mass percentage of the non-aqueous solvent was changed accordingly, and the mass percentage of the lithium salt and the mass ratio of the components of the non-aqueous solvent remained unchanged. The negative electrode active material was ball-milled, and the ball milling time was adjusted to ensure that the value of the specific surface area c of the negative electrode active material was as shown in Table 1. The temperature and pressure of the pyrolysis treatment were adjusted to ensure that the value of the proportion a of the end face was as shown in Table 1.

The relevant parameters and performance tests of the examples and comparative examples are shown in Tables 1 to 3.

**Table 1**

| | c (m²/g) | a | Fluorinated linear ester | d (%) | c/d | a/d | Cycling capacity retention rate at 4.4 V (%) | Cycling thickness swelling rate at 45°C (%) | Charging time T (min) |
|---|---|---|---|---|---|---|---|---|---|
| Example 1-1 | 1.3 | 0.4 | Formula (27) | 15 | 0.087 | 0.027 | 83.7 | 10.8 | 26.5 |
| Example 1-2 | 1.3 | 0.4 | Formula (27) | 5 | 0.26 | 0.08 | 82.7 | 11.3 | 26.3 |
| Example 1-3 | 1.3 | 0.4 | Formula (27) | 30 | 0.043 | 0.013 | 84.1 | 10.5 | 26.8 |
| Example 1-4 | 1.3 | 0.4 | Formula (27) | 40 | 0.033 | 0.01 | 84.6 | 9.8 | 27 |
| Example 1-5 | 1.3 | 0.4 | Formula (27) | 50 | 0.026 | 0.008 | 84.3 | 10.0 | 27.2 |
| Example 1-6 | 1.3 | 0.4 | Formula (27) | 65 | 0.02 | 0.0062 | 83.9 | 11.0 | 27.5 |
| Example 1-7 | 1.3 | 0.4 | Formula (1) | 15 | 0.087 | 0.027 | 81.1 | 12.3 | 27.6 |
| Example 1-8 | 1.3 | 0.4 | Formula (6) | 15 | 0.087 | 0.027 | 81.6 | 11.9 | 27.4 |
| Example 1-9 | 1.3 | 0.4 | Formula (13) | 15 | 0.087 | 0.027 | 82.8 | 11.4 | 27 |
| Example 1-10 | 1.3 | 0.4 | Formula (14) | 15 | 0.087 | 0.027 | 82.5 | 11.5 | 26.8 |
| Example 1-11 | 1.3 | 0.4 | Formula (20) | 15 | 0.087 | 0.027 | 83.3 | 11.2 | 26.7 |
| Example 1-12 | 1.3 | 0.4 | Formula (21) | 15 | 0.087 | 0.027 | 81.9 | 11.7 | 27.2 |
| Example 1-13 | 0.1 | 0.6 | Formula (14) | 65 | 0.0015 | 0.0092 | 76.8 | 13.6 | 28 |
| Example 1-14 | 1 | 0.5 | Formula (14) | 65 | 0.015 | 0.0077 | 79 | 11.5 | 27.5 |
| Example 1-15 | 1 | 0.3 | Formula (14) | 15 | 0.067 | 0.02 | 80.8 | 11.3 | 27.3 |
| Example 1-16 | 2 | 0.3 | Formula (14) | 15 | 0.13 | 0.02 | 81.6 | 11.8 | 26.7 |
| Example 1-17 | 5 | 0.3 | Formula (14) | 15 | 0.33 | 0.02 | 80.2 | 13 | 26.5 |
| Example 1-18 | 1.3 | 0.4 | Formula (14) | 5 | 0.26 | 0.08 | 81.6 | 11.1 | 26.6 |
| Example 1-19 | 10 | 0.2 | Formula (14) | 15 | 0.67 | 0.013 | 77.4 | 15.5 | 27.6 |
| Example 1-20 | 10 | 0.2 | Formula (14) | 5 | 2 | 0.04 | 76.3 | 16.4 | 27.4 |
| Example 1-21 | 10 | 0.1 | Formula (14) | 5 | 2 | 0.02 | 75.8 | 16.2 | 27.9 |
| Example 1-22 | 1.3 | 0.6 | Formula (14) | 15 | 0.087 | 0.04 | 79.1 | 13.7 | 26.1 |
| Example 1-23 | 1.3 | 0.5 | Formula (14) | 15 | 0.087 | 0.033 | 81 | 11.9 | 26.4 |
| Example 1-24 | 1.3 | 0.3 | Formula (14) | 15 | 0.087 | 0.02 | 81.3 | 11.4 | 27.1 |
| Example 1-25 | 1.3 | 0.2 | Formula (14) | 15 | 0.087 | 0.013 | 79.9 | 11.1 | 27.4 |
| Example 1-26 | 1.3 | 0.1 | Formula (14) | 15 | 0.087 | 0.0067 | 78.6 | 11 | 27.9 |
| Example 1-27 | 1.3 | 0.1 | Formula (14) | 65 | 0.02 | 0.0015 | 78.7 | 11.3 | 29.0 |
| Example 1-28 | 1.3 | 0.6 | Formula (14) | 5 | 0.26 | 0.12 | 78.9 | 13.2 | 26.1 |
| Comparative Example 1 | 0.1 | 0.6 | / | / | / | / | 71.7 | 17.4 | 29 |
| Comparative Example 2 | 1.3 | 0.4 | / | / | / | / | 73.5 | 16.8 | 27.7 |
| Comparative Example 3 | 0.05 | 0.4 | Formula (14) | 50 | 0.001 | 0.008 | 74.7 | 15.3 | 32.8 |
| Comparative Example 4 | 15 | 0.4 | Formula (14) | 5 | 3 | 0.08 | 74.2 | 18.7 | 28.3 |
| Comparative Example 5 | 1.3 | 0.7 | Formula (14) | 70 | 0.019 | 0.01 | 74.9 | 16.8 | 27.4 |
| Comparative Example 6 | 1.3 | 0.05 | Formula (14) | 5 | 0.26 | 0.01 | 75.2 | 15.5 | 29.3 |

| | | | | | | | | | |
|---|---|---|---|---|---|---|---|---|---|
| Note: The "/" in Table 1 indicates absence of the corresponding substance or parameter. | | | | | | | | | |

From Examples 1-1 to 1-28 and Comparative Examples 1 to 6, it can be seen that when the electrolyte includes a fluorinated linear ester and the values of d, c/d, and a/d are regulated to be within the ranges provided in this application, the lithium-ion battery can have a higher cycling capacity retention rate at 4.4 V, a lower cycling thickness swelling rate at 45°C, and a shorter charging time, indicating that the lithium-ion battery has better cycling performance and better fast charging performance under high-voltage and high-temperature conditions. The electrolytes of Comparative Example 1 and Comparative Example 2 do not include a fluorinated linear ester, the value of c/d in Comparative Example 3 is too small, the value of c/d in Comparative Example 4 is too large, the values of d and a/d in Comparative Example 5 are too large, and the value of a/d in Comparative Example 6 is too small, and the corresponding lithium-ion batteries have a lower cycling capacity retention rate at 4.4 V, a higher cycling thickness swelling rate at 45°C, and a longer charging time. This indicates that when at least one of d, c/d, and a/d is outside the range provided in this application, the lithium-ion battery has poor cycling performance and fast charging performance under high-voltage and high-temperature conditions.

The type of the fluorinated linear ester usually affects the cycling performance and fast charging performance of lithium-ion batteries under high-voltage and high-temperature conditions. From Examples 1-1 and 1-7 to 1-12, it can be seen that when a fluorinated linear ester within the range provided in this application is selected, the lithium-ion battery has a higher cycling capacity retention rate at 4.4 V, a lower cycling thickness swelling rate at 45°C, and a shorter charging time, indicating that the lithium-ion battery has better cycling performance and better fast charging performance under high-voltage and high-temperature conditions.

The values of c and a usually affect the cycling performance and fast charging performance of lithium-ion batteries under high-voltage and high-temperature conditions. From Examples 1-13 to 1-28, it can be seen that when the values of c and a are regulated to be within the ranges provided in this application, the lithium-ion battery has a higher cycling capacity retention rate at 4.4 V, a lower cycling thickness swelling rate at 45°C, and a shorter charging time, indicating that the lithium-ion battery has better cycling performance and better fast charging performance under high-voltage and high-temperature conditions.

**Table 2**

| | a | d (%) | g (%) | e (%) | a/g | e/d | Cycling capacity retention rate at 4.4 V (%) | Cycling thickness swelling rate at 45°C (%) | Charging time T (min) |
|---|---|---|---|---|---|---|---|---|---|
| Example 1-4 | 0.4 | 40 | / | / | / | / | 84.6 | 9.8 | 27 |
| Example 2-1 | 0.4 | 40 | 0.01 | / | 40 | / | 84.7 | 9.8 | 27 |
| Example 2-2 | 0.4 | 40 | 0.1 | / | 4 | / | 84.9 | 9.7 | 27 |
| Example 2-3 | 0.4 | 40 | 1 | / | 0.4 | / | 85.3 | 9.5 | 27.1 |
| Example 2-4 | 0.4 | 40 | 5 | / | 0.08 | / | 86.6 | 8.6 | 27.3 |
| Example 2-5 | 0.4 | 40 | 8 | / | 0.05 | / | 87.9 | 7.3 | 27.5 |
| Example 2-6 | 0.4 | 40 | 15 | / | 0.027 | / | 87.5 | 8.9 | 28.2 |
| Example 2-7 | 0.1 | 40 | 15 | / | 0.0067 | / | 84.8 | 8.3 | 28.5 |
| Example 2-8 | 0.6 | 40 | 0.01 | / | 60 | / | 81.8 | 11.8 | 26 |
| Example 2-9 | 0.4 | 40 | 8 | 0.1 | 0.05 | 0.0025 | 88 | 7.3 | 27.3 |
| Example 2-10 | 0.4 | 40 | 8 | 0.6 | 0.05 | 0.015 | 88.5 | 7.2 | 26.8 |
| Example 2-11 | 0.4 | 40 | 8 | 1 | 0.05 | 0.025 | 88.8 | 7 | 26.2 |
| Example 2-12 | 0.4 | 40 | 8 | 3 | 0.05 | 0.075 | 90.2 | 6.1 | 24.6 |
| Example 2-13 | 0.4 | 40 | 8 | 5 | 0.05 | 0.125 | 90.3 | 6.2 | 24.4 |
| Example 2-14 | 0.4 | 40 | 8 | 10 | 0.05 | 0.25 | 89.6 | 6.8 | 24.3 |
| Example 2-15 | 0.4 | 15 | 8 | 5 | 0.05 | 0.33 | 89.4 | 7.1 | 23.7 |
| Example 2-16 | 0.4 | 65 | 8 | 0.1 | 0.05 | 0.0015 | 87.4 | 7.7 | 28.5 |
| Example 2-17 | 0.4 | 5 | 8 | 10 | 0.05 | 2 | 87.7 | 7.9 | 22.9 |

| | | | | | | | | | |
|---|---|---|---|---|---|---|---|---|---|
| Note: The "/" in Table 2 indicates absence of the corresponding substance or parameter. | | | | | | | | | |

The presence of fluorinated ethylene carbonate in the electrolyte and the values of g and a/g usually affect the cycling performance and fast charging performance of lithium-ion batteries under high-voltage and high-temperature conditions. From Examples 1-4 and 2-1 to 2-8, it can be seen that when the electrolyte includes a fluorinated linear ester, fluorinated ethylene carbonate is further introduced, and the values of g and a/g are regulated to be within the ranges provided in this application, the lithium-ion battery has a higher cycling capacity retention rate at 4.4 V, a lower cycling thickness swelling rate at 45°C, and a shorter charging time, indicating that the lithium-ion battery has better cycling performance and better fast charging performance under high-voltage and high-temperature conditions.

From Examples 2-5 and 2-9 to 2-17, it can be seen that when the electrolyte includes a fluorinated linear ester and fluorinated ethylene carbonate, a wetting agent is further introduced, and the values of e and e/d are regulated to be within the ranges provided in this application, the lithium-ion battery has a higher cycling capacity retention rate at 4.4 V, a lower cycling thickness swelling rate at 45°C, and a shorter charging time, indicating that the lithium-ion battery has better cycling performance and better fast charging performance under high-voltage and high-temperature conditions.

**Table 3**

| | d (%) | Wetting agent | e (%) | e/d | Cycling capacity retention rate at 4.4 V (%) | Cycling thickness swelling rate at 45°C (%) | Charging time T (min) |
|---|---|---|---|---|---|---|---|
| Example 1-4 | 40 | / | / | / | 84.6 | 9.8 | 27 |
| Example 3-1 | 40 | Fluorobenzene | 0.1 | 0.0025 | 84.7 | 9.8 | 27 |
| Example 3-2 | 40 | Fluorobenzene | 0.6 | 0.015 | 85 | 9.8 | 26.5 |
| Example 3-3 | 40 | Fluorobenzene | 1 | 0.025 | 85.3 | 9.7 | 25.9 |
| Example 3-4 | 40 | Fluorobenzene | 3 | 0.075 | 86.7 | 8.8 | 24.3 |
| Example 3-5 | 40 | Fluorobenzene | 5 | 0.125 | 86.8 | 8.9 | 24.1 |
| Example 3-6 | 40 | Fluorobenzene | 10 | 0.25 | 86.1 | 9.5 | 24 |
| Example 3-7 | 15 | Fluorobenzene | 5 | 0.33 | 85.9 | 9.8 | 23.4 |
| Example 3-8 | 5 | Fluorobenzene | 10 | 2 | 84.2 | 10 | 22.7 |
| Example 3-9 | 40 | 1,3,5-trifluorobenzene | 3 | 0.075 | 86.6 | 8.8 | 24.4 |
| Example 3-10 | 40 | Pentafluorobenzene | 3 | 0.075 | 86.7 | 8.7 | 24.5 |
| Example 3-11 | 40 | p-fluorotoluene | 3 | 0.075 | 86.5 | 9 | 24.6 |
| Example 3-12 | 40 | 2,2,2-trifluoroethyl ether | 3 | 0.075 | 86.6 | 9.4 | 23.8 |
| Example 3-13 | 40 | Difluoromethyl 2,2,3,3-tetrafluoropropyl ether | 3 | 0.075 | 86.2 | 9.6 | 23.9 |
| Example 3-14 | 40 | Perfluorododecane | 3 | 0.075 | 86.7 | 8.9 | 24.4 |

| | | | | | | | |
|---|---|---|---|---|---|---|---|
| Note: The "/" in Table 3 indicates absence of the corresponding substance or parameter. | | | | | | | |

The presence of a wetting agent in the electrolyte and the values of e and e/d usually affect the cycling performance and fast charging performance of lithium-ion batteries under high-voltage and high-temperature conditions. From Examples 1-4, and 3-1 to 3-8, it can be seen that when the electrolyte includes a fluorinated linear ester, a wetting agent is further introduced, and the values of e and e/d are regulated to be within the ranges provided in this application, the lithium-ion battery has a higher cycling capacity retention rate at 4.4 V, a lower cycling thickness swelling rate at 45°C, and a shorter charging time, indicating that the lithium-ion battery has better cycling performance and better fast charging performance under high-voltage and high-temperature conditions.

The type of the wetting agent usually affects the cycling performance and fast charging performance of lithium-ion batteries under high-voltage and high-temperature conditions. From Examples 1-4, and 3-9 to 3-14, it can be seen that when the wetting agent within the range provided in this application is selected, the lithium-ion battery has a higher cycling capacity retention rate at 4.4 V, a lower cycling thickness swelling rate at 45°C, and a shorter charging time, indicating that the lithium-ion battery has better cycling performance and better fast charging performance under high-voltage and high-temperature conditions.

All embodiments in this specification are described in a related manner. For the same or similar parts between these embodiments, reference may be made to each other. Each embodiment focuses on the differences from other embodiments.

The above descriptions are only preferred embodiments of this application and are not intended to limit this application. Any modifications, equivalent replacements, improvements, and the like made within the spirit and principles of this application shall be included in the protection scope of this application.

## Claims

1. A secondary battery, which comprises a positive electrode sheet, a negative electrode sheet, a separator, and an electrolyte, wherein the negative electrode sheet comprises a negative electrode current collector and a negative electrode material layer disposed on at least one surface of the negative electrode current collector, the negative electrode material layer comprises a negative electrode active material, a specific surface area of the negative electrode active material is c m²/g, the negative electrode active material comprises a basal plane and an end face, and a proportion of the end face is a; and
the electrolyte comprises a fluorinated linear ester, and based on a mass of the electrolyte, a mass percentage of the fluorinated linear ester is d%, 5≤d≤65, 0.0015≤c/d≤2, and 0.0015≤a/d≤0.12.

2. The secondary battery according to claim 1, wherein 0.1≤c≤10, and 0.1≤a≤0.6.

3. The secondary battery according to claim 1 or 2, wherein the fluorinated linear ester comprises at least one of the following compounds:

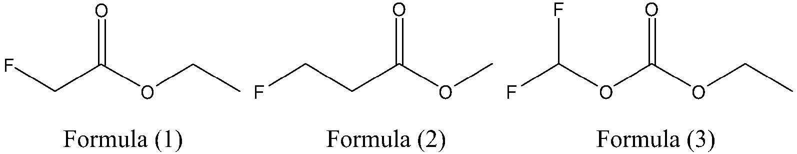

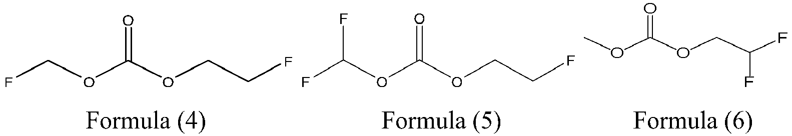

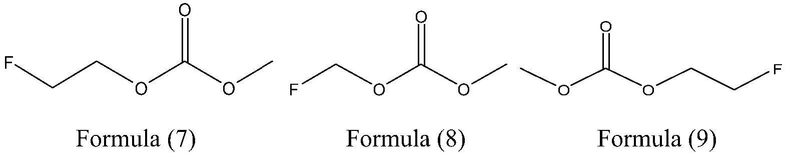

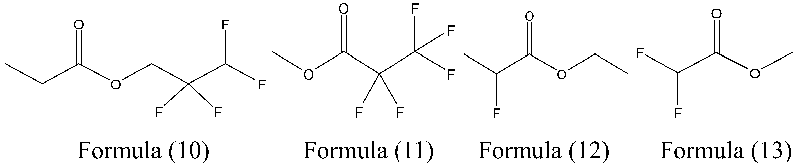

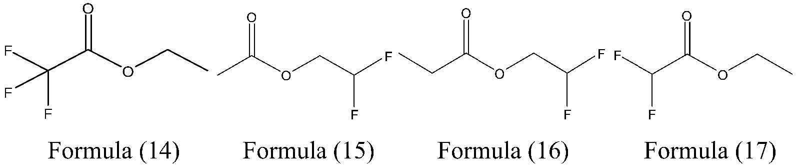

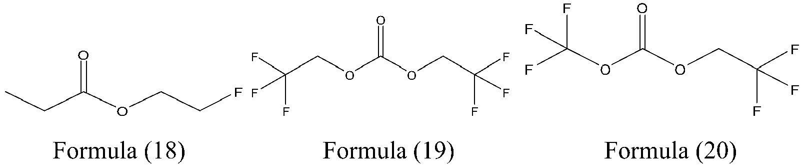

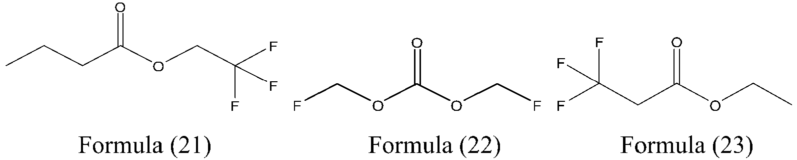

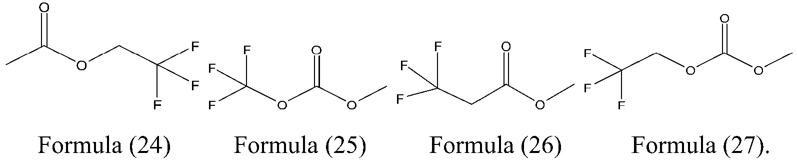

4. The secondary battery according to any one of claims 1 to 3, wherein the electrolyte further comprises fluorinated ethylene carbonate; and based on the mass of the electrolyte, a mass percentage of the fluorinated ethylene carbonate is g%, wherein 0.01≤g≤15.

5. The secondary battery according to claim 4, wherein 0.0067≤a/g≤60.

6. The secondary battery according to any one of claims 1 to 5, wherein the electrolyte further comprises a wetting agent; and based on the mass of the electrolyte, a mass percentage of the wetting agent is e%, wherein 0.1≤e≤10; and
the wetting agent comprises at least one of C₆ to C₁₂ fluorinated aromatic hydrocarbons, C₁ to C₆ fluorinated ether compounds, or C₁ to C₁₂ perfluoroalkanes.

7. The secondary battery according to claim 6, wherein 0.0015≤e/d≤2.

8. The secondary battery according to claim 6 or 7, wherein the wetting agent comprises at least one of fluorobenzene, 1,2-difluorobenzene, 1,3-difluorobenzene, 1,4-difluorobenzene, 1,3,5-trifluorobenzene, 1,2,3-trifluorobenzene, 1,2,4-trifluorobenzene, 1,2,3,5-tetrafluorobenzene, 1,2,4,5-tetrafluorobenzene, 1,2,3,4-tetrafluorobenzene, pentafluorobenzene, hexafluorobenzene, p-fluorotoluene, p-bis(trifluoromethyl)benzene, 1,1,2,2-tetrafluoroethyl-2,2,3,3-tetrafluoropropyl ether, 2,2,2-trifluoroethyl ether, 1,1,2,2-tetrafluoroethyl-2,2,2-trifluoroethyl ether, difluoromethyl 2,2,3,3-tetrafluoropropyl ether, 1,1,1,3,3,3-hexafluoroisopropyl methyl ether, or perfluorododecane.

9. The secondary battery according to any one of claims 1 to 8, wherein the secondary battery satisfies at least one of the following characteristics:
(1) $15 \leq d \leq 50 ;$
(2) $0.015 \leq c / d \leq 0.33 ;$
(3) $0.0077 \leq a / d \leq 0.08 ;$
(4) $1 \leq c \leq 5 ;$
(5) $0.3 \leq a \leq 0.5 ;$
(6) the electrolyte further comprises a wetting agent; and based on the mass of the electrolyte, a mass percentage of the wetting agent is e%, wherein 0.015≤e/d≤0.33; or
(7) the negative electrode active material comprises at least one of natural graphite, artificial graphite, hard carbon, or soft carbon.

10. An electronic apparatus, comprising the secondary battery according to any one of claims 1 to 9.
